# EUROPÄISCHE PATENTSCHRIFT

(11) **EP 1 094 938 B1**
(45) Veröffentlichungstag und Bekanntmachung des Hinweises auf die Patenterteilung: **24.07.2002**
(21) Anmeldenummer: 99955454.6
(22) Anmeldetag: 22.05.1999
(51) Int. Cl.: B32B 17/08, C08G 18/48, B63B 3/00

(54) **VERBUNDELEMENTE ENTHALTEND KOMPAKTE POLYISOCYANAT-POLYADDITIONSPRODUKTE**
COMPOSITE ELEMENTS CONTAINING COMPACT POLYISOCYANATE POLYADDITION PRODUCTS
ELEMENTS COMPOSITES CONTENANT DES PRODUITS COMPACTS DE POLYADDITION DE POLYISOCYANATE

(30) Priorität: 05.06.1998 DE 19825083
(43) Veröffentlichungstag der Anmeldung: 02.05.2001
(73) Patentinhaber: BASF AKTIENGESELLSCHAFT, 67056 Ludwigshafen (DE)
(72) Erfinder: WILD, Heike, D-82140 Olching (DE); REESE, Hans-Juergen, D-82140 Olching (DE); KNOBLAUCH, Georg, D-81247 München (DE); BARTZ, Thomas, D-82140 Olching (DE); RANK, Mathäus, D-82140 Olching (DE); FORSTER, Heinz, D-82515 Wolfratshausen (DE)
(86) Internationale Anmeldenummer: EP9903545
(87) Internationale Veröffentlichungsnummer: WO9964234

(56) Entgegenhaltungen:
- EP-A- 0 405 300
- WO-A-98/21029
- US-A- 4 547 561
- US-A- 4 859 523
- DATABASE WPI Section Ch, Week 9443 Derwent Publications Ltd., London, GB; Class A25, AN 94-347175 XP002113984 & JP 06 271639 A (INOAC CORP KK), 27. September 1994 (1994-09-27)

## Beschreibung

Die Erfindung betrifft Verbundelemente, die folgende Schichtstruktur aufweisen:
(i) 2 bis 20 mm, bevorzugt 5 bis 20 mm, besonders bevorzugt 5 bis 10 mm Metall,
(ii)10 bis 100 mm kompakte Polyisocyanat-Polyadditionsprodukte erhältlich durch Umsetzung von (a) Isocyanaten mit (b) Polyetherpolyalkoholen gegebenenfalls in Gegenwart von (c) Katalysatoren und/oder (d) Hilfs- und/oder Zusatzstoffen,
(iii)2 bis 20 mm, bevorzugt 5 bis 20 mm, besonders bevorzugt 5 bis 10 mm Metall.

Des weiteren bezieht sich die Erfindung auf Verfahren zur Herstellung dieser Verbundelemente und deren Verwendung.

Für Konstruktion von Schiffen, beispielsweise Schiffsrümpfen und Laderaumabdeckungen, Brücken oder Hochhäusern müssen Konstruktionsteile verwendet werden, die erheblichen Belastungen durch äußere Kräfte standhalten können. Derartige Konstruktionsteile bestehen aufgrund dieser Anforderungen üblicherweise aus Metallplatten oder Metallträgern, die durch eine entsprechende Geometrie oder geeignete Verstrebungen verstärkt sind. So bestehen Schiffsrümpfe von Tankschiffen aufgrund von erhöhten Sicherheitsnormen üblicherweise aus einem inneren und einem äußeren Rumpf, wobei jeder Rumpf aus 15 mm dicken Stahlplatten, die durch ca. 2 m lange Stahlverstrebungen miteinander verbunden sind, aufgebaut ist. Da diese Stahlplatten erheblichen Kräften ausgesetzt sind, werden sowohl die äußere, als auch die innere Stahlhülle durch aufgeschweißte Verstärkungselemente versteift. Nachteilig an diesen klassischen Konstruktionsteilen wirken sich sowohl die erheblichen Mengen an Stahl aus, die benötigt werden, als auch die zeit- und arbeitsintensive Herstellung. Zudem weisen derartige Konstruktionsteile ein erhebliches Gewicht auf, wodurch sich eine geringere Tonnage der Schiffe und ein erhöhter Treibstoffbedarf ergibt. Zusätzlich sind solche klassischen Konstruktionselemente auf der Basis von Stahl sehr pflegeintensiv, da sowohl die äußeren Oberfläche, als auch die Oberflächen der Stahlteile zwischen der äußeren und inneren Hülle regelmäßig gegen Korrosion geschützt werden müssen.
Der vorliegenden Erfindung lag daher die Aufgabe zugrunde, Konstruktionsteile zu entwickeln, die großen Belastungen durch äußere Kräfte standhalten und beispielsweise im Schiff-, Brücken- oder Hochhausbau Verwendung finden können. Die zu entwickelnden Konstruktionsteile, auch Verbundelemente genannt, sollen als Ersatz für bekannte Stahlkonstruktionen dienen und insbesondere Vorteile hinsichtlich Gewicht, Herstellprozeß und Wartungsintensität aufweisen. Insbesondere sollten die Verbundelemente mit großen Abmessungen einfach und schnell herzustellen sein und zudem durch eine verbesserte Stabilität gegen Hydrolyse im Schiffbau verwendbar sein.

Diese Aufgabe wurde erfindungsgemäß durch die eingangs beschriebenen Verbundelemente gelöst.

Die erfindungsgemäßen Verbundelemente werden unter Verwendung von Polyetherpolyalkoholen zur Umsetzung mit den Isocyanaten hergestellt. Die Verwendung von Polyetherpolyalkoholen bietet erhebliche Vorteile durch eine verbesserte Stabilität der Polyisocyanat-Polyadditionsprodukte gegen eine hydrolytische Spaltung und aufgrund der geringeren Viskosität, jeweils im Vergleich mit Polyesterpolyalkoholen. Die verbesserte Stabilität gegen Hydrolyse ist insbesondere bei einem Einsatz im Schiffbau vorteilhaft. Die geringere Viskosität der Polyetherpolyalkohole und der Reaktionsmischung zur Herstellung von (ii) enthaltend die Polyetherpolyalkohole ermöglicht eine schnellere und einfachere Befüllung des Raumes zwischen (i) und (iii) mit der Reaktionsmischung zur Herstellung der Verbundelemente. Aufgrund der erheblichen Abmessungen insbesondere von Konstruktionsteilen im Schiffbau sind niedrigviskose Flüssigkeiten von erheblichem Vorteil.

Die Herstellung der erfindungsgemäßen Verbundelemente kann man derart durchführen, daß man zwischen (i) und (iii) durch Umsetzung von (a) Isocyanaten mit (b) Polyetherpolyalkoholen gegebenenfalls in Gegenwart von (c) Katalysatoren und/oder (d) Hilfs- und/oder Zusatzstoffen kompakte Polyisocyanat-Polyadditionsprodukte herstellt, die an (i) und (iii) haften.

Bevorzugt kann man die Oberflächen von (i) und/oder (iii), an die (ii) nach der Herstellung der Verbundelemente haftet, mit Sand bestrahlen. Dieses Sandstrahlen kann nach üblichen Verfahren erfolgen. Beispielsweise kann man die Oberflächen unter hohem Druck mit üblichem Sand bestrahlen und damit beispielsweise reinigen und Aufrauhen. Geeignete Apparaturen für eine solche Behandlung sind kommerziell erhältlich.

Durch diese Behandlung der Oberflächen von (i) und (iii), die nach der Umsetzung von (a) mit (b) gegebenenfalls in Gegenwart von (c) und/oder (d) in Kontakt mit (ii) stehen, führt zu einer deutlich verbesserten Haftung von (ii) an (i) und (iii). Das Sandstrahlen wird bevorzugt direkt vor der Einbringung der Komponenten zur Herstellung von (ii) in den Raum zwischen (i) und (iii) durchgeführt.

Nach der bevorzugten Behandlung der Oberflächen von (i) und (iii) werden diese Schichten bevorzugt in geeigneter Anordnung, beispielsweise parallel zueinander, fixiert. Der Abstand wird üblicherweise so gewählt, daß der Raum zwischen (i) und (iii) eine Dicke von 10 bis 100 mm aufweist. Die Fixierung von (i) und (iii) kann beispielsweise durch Abstandshalter erfolgen. Die Ränder des Zwischenraumes können bevorzugt derart abgedichtet werden, daß der Raum zwischen (i) und (iii) zwar mit (a) und (b) und gegebenenfalls (c) und/oder (d) gefüllt werden kann, ein Herausfließen dieser Komponenten aber verhindert wird. Das Abdichten kann mit üblichen Kunststoff- oder Metallfolien und/oder Metallplatten, die auch als Abstandshalter dienen können, erfolgen.

Die Schichten (i) und (iii) können bevorzugt als übliche Metallplatten, beispielsweise Stahlplatten, mit den erfindungsgemäßen Dicken eingesetzt werden.

Die Befüllung des Raumes zwischen (i) und (iii) kann sowohl in vertikaler Ausrichtung von (i) und (iii), als auch in horizontaler Ausrichtung von (i) und (iii) erfolgen.

Das Befüllen des Raumes zwischen (i) und (iii) mit (a), (b) und gegebenenfalls (c) und/oder (d) kann mit üblichen Fördereinrichtungen, bevorzugt kontinuierlich, durchgeführt werden, beispielsweise Hoch- und Niederdruckmaschinen, vorzugsweise Hochdruckmaschinen.

Die Förderleistung kann in Abhängigkeit des zu befüllenden Volumens variiert werden. Um eine homogene Durchhärtung von (ii) zu gewährleisten, wird die Förderleistung und Fördereinrichtung derart gewählt, daß der zu befüllende Raum innerhalb von 5 bis 20 min mit den Komponenten zur Herstellung von (ii) gefüllt werden kann.

Als Schichten (i) und (iii), üblicherweise Platten, können übliche Metalle verwendet werden, beispielsweise Eisen, üblicher Stahl, alle Arten von veredeltem Stahl, Aluminium und/oder Kupfer.

Sowohl (i) als auch (ii) können beschichtet, beispielsweise grundiert, lackiert und/oder mit üblichen Kunststoffen beschichtet bei der Herstellung der erfindungsgemäßen Verbundelemente eingesetzt werden. Bevorzugt werden (i) und (iii) unbeschichtet und besonders bevorzugt beispielsweise durch übliches Sandstrahlen gereinigt eingesetzt.

Die Herstellung der kompakten Polyisocyanat-Polyadditionsprodukten (ii), üblicherweise Polyurethan- und gegebenenfalls Polyisocyanuratprodukten, insbesondere Polyurethanelastomeren, durch Umsetzung von (a) Isocyanaten mit (b) gegenüber Isocyanaten reaktiven Verbindungen gegebenenfalls in Gegenwart von (c) Katalysatoren, (d) Hilfsmitteln und/oder Zusatzstoffen ist vielfach beschrieben worden. Unter kompakten Polyisocyanat-Polyadditionsprodukten sind solche zu verstehen, die keinen zelligen Aufbau aufweisen, wie er beispielsweise für Polyurethanschaumstoffe üblich ist. Um diesen kompakten Aufbau zu gewährleisten, wird die Zugabe von Treibmitteln zu den Ausgangskomponenten zur Herstellung von (ii) vermieden. Um einen Schäumprozeß weitestgehend zu vermeiden, sollten sowohl die Ausgangskomponenten (b) und gegebenenfalls (c) und (d) als auch die Oberflächen von (i) und (iii), die mit den Reaktionskomponenten in Berührung kommen, bevorzugt trocken sein.

Der Wassergehalt in der Reaktionsmischung enthaltend (a), (b) und gegebenenfalls (c) und/oder (d) beträgt bevorzugt 0 bis 0,03 Gew.-%, bezogen auf das Gewicht der Reaktionsmischung. Der Wassergehalt insbesondere in der Komponente (b) kann beispielsweise durch Destillation entsprechend eingestellt werden. Es ist zudem möglich, der Reaktionsmischung Verbindungen zuzugeben, die Wasser binden und damit eine Treibreaktion verhindern. Derartige Verbindungen, beispielsweise Molekularsiebe, sind allgemein bekannt. Z.B. können Silikate und Oxazolidine in geeigneter, bevorzugt fein verteilter Form verwendet werden. Diese Verbindungen können bevorzugt in Mengen von 0,05 bis 5 Gew.-%, bezogen auf das Gewicht der Reaktionsmischung, der Reaktionsmischung, bevorzugt der Komponente (b), zugesetzt werden.

Die Ausgangsstoffe (a), (b), (c) und (d) in dem erfindungsgemäßen Verfahren werden im Folgenden beispielhaft beschrieben:
Als Isocyanate (a) kommen die an sich bekannten aliphatischen, cycloaliphatischen, araliphatischen und/oder aromatischen Isocyanate, bevorzugt Diisocyanate in Frage, die gegebenenfalls nach allgemein bekannten Verfahren biuretisiert und/oder iscyanuratisiert worden sein können. Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylendiisocyanat-1,4, Lysinesterdiisocyanate (LDI), Hexamethylendiisocyanat-1,6 (HDI), Cyclohexan-1,3- und/oder 1,4-diisocyanat, 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, 1-Isocyanato-3,3,5-trimethyl-5-isocyanatomethylcyclohexan (IPDI), 2,4- und/oder 2,6-Toluylendiisocyanat (TDI), 4,4'-, 2,4'- und/oder 2,2'-Diphenylmethandiisocyanat (MDI), Polyphenylpolymethylen-polyisocyanate und/oder Mischungen enthaltend mindestens zwei der genannten Isocyanate. Außerdem können Ester-, Harnstoff-, Allophanat-, Carbodiimid-, Uretdion- und/oder Urethangruppen enthaltende Di- und/oder Polyisocyanate in dem erfindungsgemäßen Verfahren eingesetzt werden. Bevorzugt werden 2,4'-, 2,2'- und/oder 4,4'-MDI und/oder Polyphenylpolymethylen-polyisocyanate eingesetzt, besonders bevorzugt Mischungen enthaltend Polyphenylpolymethylen-polyisocyanate und mindestens eines der MDI-Isomere.

Als (b) gegenüber Isocyanaten reaktive Verbindungen werden erfindungsgemäß Polyetherpolyalkohole, zweckmäßigerweise solche mit einer mittleren Funktionalität von 1 bis 8, vorzugsweise 1,5 bis 6, und einem Molekulargewicht von 400 bis 8000 verwendet.

Beispielsweise kommen als Polyetherpolyalkohole, die nach bekannter Technologie durch Anlagerung von Alkylenoxiden, beispielsweise Tetrahydrofuran, 1,3-Propylenoxid, 1,2- bzw. 2,3-Butylenoxid, Styroloxid und vorzugsweise Ethylenoxid und/oder 1,2-Propylenoxid an übliche Startersubstanzen erhältlich sind. Als Startersubstanzen können beispielsweise bekannte aliphatische, araliphatische, cycloaliphatische und/oder aromatische Verbindungen eingesetzt werden, mindestens eine Hydroxylgruppen und/oder mindestens eine Aminogruppen enthalten. Beispielsweise können als Startersubstanzen Ethandiol, Diethylenglykol, 1,2- bzw. 1,3-Propandiol, 1,4-Butandiol, 1,5-Pentandiol, 1,6-Hexandiol, 1,7-Heptandiol, Glycerin, Trimethylolpropan, Neopentylglykol, Zucker, beispielsweise Saccharose, Pentaerythrit, Sorbitol, Ethylendiamin, Propandiamin, Neopentandiamin, Hexamethylendiamin, Isophorondiamin, 4,4'-Diaminodicyclohexylmethan, 2-(Ethylamino)ethylamin, 3-(Methylamino)propylamin, Diethylentriamin, Dipropylentriamin und/oder N,N'-Bis(3-aminopropyl)-ethylendiamin.

Die Alkylenoxide können einzeln, alternierend nacheinander oder als Mischungen verwendet werden. Bevorzugt werden Alkylenoxide verwendet, die zu primären Hydroxylgruppen in dem Polyol führen. Besonders bevorzugt werden als Polyole solche eingesetzt, die zum Abschluß der Alkoxylierung mit Ethylenoxid alkoxyliert wurden und damit primäre Hydroxylgruppen aufweisen.

Gegebenenfalls können zusätzlich zu den Polyetherpolyalkoholen weitere gegenüber Isocyanaten reaktive Verbindungen als (b) verwendet werden, beispielsweise solche die als gegenüber Isocyanaten reaktive Gruppen Hydroxyl-, Thiol- und/oder primäre und/sekundäre Aminogruppen aufweisen, z.B. Polyole ausgewählt aus der Gruppe der Polyesterpolyalkohole, Polythioether-polyole, hydroxylgruppenhaltigen Polyacetale und hydroxylgruppenhaltigen aliphatischen Polycarbonate oder Mischungen aus mindestens zwei der genannten Polyole. Diese gegebenenfalls zusätzlich zu den Polyetherpolyalkoholen einzusetzenden Verbindungen weisen üblicherweise eine Funktionalität von 2 bis 6 und ein Molekulargewicht von 400 bis 8000 auf.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Die Polyesterpolyole besitzen vorzugsweise eine Funktionalität von 2 bis 4, insbesondere 2 bis 3, und ein Molekulargewicht von 480 bis 3000, vorzugsweise 600 bis 2000.

Als gegenüber Isocyanaten reaktive Verbindungen sind zusätzlich zu den erfindungsgemäßen Polyetherpolyalkoholen des weiteren Substanzen geeignet, die ein Kohlenwasserstoffgerüst mit 10 bis 40 Kohlenstoffatomen und 2 bis 4 gegenüber Isocyanaten reaktive Gruppen aufweisen. Unter dem Ausdruck Kohlenwasserstoffgerüst ist eine ununterbrochene Abfolge von Kohlenstoffatomen zu verstehen, die nicht wie beispielsweise im Falle von Ethern mit Sauerstoffatomen unterbrochen ist. Als solche Substanzen, im Folgenden auch als (b3) bezeichnet, können beispielsweise Rizinusöl und deren Derivate eingesetzt werden.

Als gegenüber Isocyanaten reaktive Verbindungen können des weiteren zusätzlich zu den erfindungsgemäßen Polyetherpolyalkoholen gegebenenfalls Diole und/oder Triole mit Molekulargewichten von 60 bis <400 als Kettenverlängerungs- und/oder Vernetzungsmittel bei dem erfindungsgemäßen Verfahren eingesetzt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Die Kettenverlängerungs- und/oder Vernetzungsmittel weisen vorzugsweise ein Molekulargewicht von 60 bis 300 auf. In Betracht kommen beispielsweise aliphatische, cycloaliphatische und/ oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan, niedermolekulare hydroxylgruppenhaltige Polyalkylenoxide auf Basis Ethylen- und/oder 1,2-Propylenoxid und den vorgenannten Diolen und/oder Triolen als Startermoleküle und/oder Diamine wie z.B. Diethyltoluendiamin und/oder 3,5-Dimethylthio-2,4-toluenediamin.

Sofern zur Herstellung der Polyisocyanat-Polyadditionsprodukten Kettenverlängerungsmittel, Vernetzungsmittel oder Mischungen davon Anwendung finden, kommen diese zweckmäßigerweise in einer Menge von 0 bis 30 Gew.-%, vorzugsweise von 2 bis 20 Gew.-%, bezogen auf das Gewicht der insgesamt eingesetzten gegenüber Isocyanaten reaktiven Verbindungen (b), zum Einsatz.

Außerdem können zusätzlich zu den erfindungsgemäßen Polyetherpolyalkoholen aliphatische, araliphatische, cycloaliphatische und/oder aromatische Carbonsäuren zur Optimierung des Härtungsverlaufes bei der Herstellung von (ii) eingesetzt werden. Beispiele für solche Carbonsäuren sind Ameisensäure, Essigsäure, Bernsteinsäure, Oxalsäure, Malonsäure, Glutarsäure, Adipinsäure, Zitronensäure, Benzoesäure, Salicylsäure, Phenylessigsäure, Phthalsäure, Rizinolsäure, Toluolsulfonsäure, Derivate der genannten Säuren, Isomere der genannten Säuren und beliebigen Mischungen der genannten Säuren. Der Gewichtsanteil dieser Säuren kann 0 bis 5 Gew.-%, bevorzugt 0,2 bis 2 Gew.-%, bezogen auf das Gesamtgewicht von (b), betragen.

Bevorzugt setzt man als (b) eine Mischung ein, die enthält:
(b1) 40 bis 99 Gew.-% Polyetherpolyalkohol mit einer mittleren Funktionalität von 1,5 bis 2,99 und einem mittleren Molekulargewicht von 400 bis 8000 und
(b2) 1 bis 60 Gew.-% Polyetherpolyalkohol mit einer mittleren Funktionalität von 3 bis und einem mittleren Molekulargewicht von 150 bis 8000.

Besonders bevorzugt setzt man als (b) eine Mischung ein, die enthält:
(b1) 40 bis 98 Gew.-% Polyetherpolyalkohol mit einer mittleren Funktionalität von 1,5 bis 2,99 und einem mittleren Molekulargewicht von 400 bis 8000,
(b2) bis 60 Gew.-% Polyetherpolyalkohol mit einer mittleren Funktionalität von 3 bis 5 und einem mittleren Molekulargewicht von 150 bis 8000 und
(b3) 1 bis 50 Gew.-% mindestens einer gegenüber Isocyanaten reaktiven Verbindung, die ein Kohlenwasserstoffgerüst mit 10 bis 40 Kohlenstoffatomen und 2 bis 4 gegenüber Isocyanaten reaktive Gruppen aufweist.

Insbesondere können die genannten, bevorzugten Mischungen zusätzlich die bereits genannten Carbonsäuren enthalten.

Bevorzugt ist das Gewichtsverhältnis von Polyetherpolyalkoholen zu Polyesterpolyalkoholen in der Komponente (b) >100, besonders bevorzugt >1000, insbesondere werden zur Herstellung von (ii) keine Polyesterpolyalkohole als (b) eingesetzt.

Mit dem Einsatz von Amin-gestarteten Polyetherpolyalkoholen kann zudem das Durchhärteverhalten von der Reaktionsmischung zur Herstellung von (ii) verbessert werden. Bevorzugt werden die Verbindungen (b), wie auch die Komponenten (c) und (d), mit einem möglichst geringen Gehalt an Wasser eingesetzt, um die Bildung von Kohlendioxid durch Reaktion des Wassers mit Isocyanatgruppen zu vermeiden.

Als Katalysatoren (c) können allgemein bekannte Verbindungen eingesetzt werden, die die Reaktion von Isocyanaten mit den gegenüber Isocyanaten reaktiven Verbindungen stark beschleunigen, wobei vorzugsweise ein Gesamtkatalysatorgehalt von 0,001 bis 15 Gew.-%, insbesondere 0,05 bis 6 Gew.-%, bezogen auf das Gewicht der insgesamt eingesetzten gegenüber Isocyanaten reaktiven Verbindungen, verwendet wird. Beispielsweise können folgende Verbindungen verwendet werden: Triethylamin, Tributylamin, Dimethylbenzylamin, Dicyclohexylmethylamin, Dimethylcyclohexylamin, N,N,N',N'-Tetramethyl-diamino-diethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4-Diazabicyclo-(2,2,2)-octan (Dabco) und Alkanolaminverbindungen, wie Triethanolamin, Triisopropanolamin, N-Methyl- und N-Ethyl-diethanolamin, Dimethylaminoethanol, 2-(N,N-Dimethylaminoethoxy)ethanol, N,N',N"-Tris-(dialkylaminoalkyl)hexahydrotriazine, z.B. N,N',N''-Tris(dimethylaminopropyl)-s-hexahydrotriazin, Eisen(II)-chlorid, Zinkchlorid, Bleioctoat und vorzugsweise Zinnsalze, wie Zinndioctoat, Zinndiethylhexoat, Dibutylzinndilaurat und/oder Dibutyldilaurylzinnmercaptid, 2,3-Dimethyl-3,4,5, 6-tetrahydropyrimidin, Tetraalkylammoniumhydroxide, wie Tetramethylammoniumhydroxid, Alkalihydroxide, wie Natriumhydroxid, Alkalialkoholate, wie Natriummethylat und Kaliumisopropylat, und/oder Alkalisalze von langkettigen Fettsäuren mit 10 bis 20 C-Atomen und gegebenenfalls seitenständigen OH-Gruppen.

Es hat sich als sehr vorteilhaft erwiesen, die Herstellung von (ii) in Gegenwart von (c), um die Reaktion zu beschleunigen, durchzuführen.

Der Reaktionsmischung zur Herstellung der Polyisocyanat-Polyadditionsprodukte (ii) können gegebenenfalls (d) Hilfsmittel und/oder Zusatzstoffe einverleibt werden. Genannt seien beispielsweise Füllstoffe, oberflächenaktive Substanzen, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure. Die oberflächenaktiven Substanzen werden üblicherweise in Mengen von 0,01 bis 5 Gew.-%, bezogen auf 100 Gew.-% der insgesamt eingesetzten gegenüber Isocyanaten reaktiven Verbindungen (b), angewandt.

Geeignete Flammschutzmittel sind beispielsweise Trikresylphosphat, Tris-(2-chlorethyl)phosphat, Tris-(2-chlorpropyl)phosphat, Tris(1,3(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-%, vorzugsweise 5 bis 25 Gew.-%, der genannten Flammschutzmittel, bezogen auf das Gewicht der, insgesamt eingesetzten gegenüber Isocyanaten reaktiven Verbindungen, zu verwenden.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und Glasfasern geringer Länge. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern. Die anorganischen und organischen Füllstoffe können einzeln oder als Gemische verwendet werden.

Bevorzugt setzt man bei der Herstellung von (ii) 10 bis 70 Gew.-% Füllstoffe, bezogen auf das Gewicht von (ii), als (d) Hilfs- und/oder Zusatzstoffe ein. Als Füllstoffe verwendet man bevorzugt Talkum, Kaolin, Calziumcarbonat, Schwerspat, Glasfasern und/oder Mikroglaskugeln. Die Größe der Partikel der Füllstoffe ist bevorzugt so zu wählen, daß das Eintragen der Komponenten zur Herstellung von (ii) in den Raum zwischen (i) und (iii) nicht behindert wird. Besonders bevorzugt weisen die Füllstoffe eine Partikelgröße von < 0,5 mm auf.

Die Füllstoffe werden bevorzugt in Mischung mit der Polyolkomponente bei der Umsetzung zur Herstellung der Polyisocyanat-Polyadditionsprodukte eingesetzt.

Die Füllstoffe können dazu dienen, den im Vergleich beispielsweise zum Stahl größeren thermischen Ausdehnungskoeffizient der Polyisocyanat-Polyadditionsprodukte zu verringern und damit dem des Stahls anzupassen. Dies für einen nachhaltig festen Verbund zwischen den Schichten (i), (ii) und (iii) besonders vorteilhaft, da damit geringere Spannungen zwischen den Schichten bei thermischer Belastung auftreten.

Das Gewicht von (ii) entspricht per Definition dem Gewicht der zur Herstellung von (ii) eingesetzten Komponenten (a), (b) und gegebenenfalls (c) und/oder (d).

Zur Herstellung der erfindungsgemäßen Polyisocyanat-Polyadditionsprodukte werden die Isocyanate und die gegenüber Isocyanaten reaktiven Verbindungen in solchen Mengen zur Umsetzung gebracht, daß das Äquivalenzverhältnis von NCO-Gruppen der Isocyanate zur Summe der reaktiven Wasserstoffatome der gegenüber Isocyanaten reaktiven Verbindungen 0,85 bis 1,25 : 1, vorzugsweise 0,95 bis 1,15 : 1 und insbesondere 1 bis 1,05 : 1, beträgt. Falls (ii) zumindest teilweise Isocyanuratgruppen gebunden enthalten, wird üblicherweise ein Verhältnis von NCO-Gruppen zur Summe der reaktiven Wasserstoffatome von 1,5 bis 60 : 1, vorzugsweise 1,5 bis 8 : 1, angewandt.

Die Polyisocyanat-Polyadditionsprodukte werden üblicherweise nach dem one shot-Verfahren oder nach dem Prepolymerverfahren, beispielsweise mit Hilfe der Hochdruck- oder Niederdruck-Technik hergestellt.

Als besonders vorteilhaft hat es sich erwiesen, nach dem Zweikomponentenverfahren zu arbeiten und die gegenüber Isocyanaten reaktiven Verbindungen (b), gegebenenfalls die Katalysatoren (c) und/oder Hilfs- und/oder Zusatzstoffe sowie Füllstoffe (d) in der Komponente (A) zu vereinigen und bevorzugt innig miteinander zu vermischen und als Komponente (B) die Isocyanate zu verivenden.

Die Ausgangskomponenten werden üblicherweise bei einer Temperatur von 0 bis 100°C, vorzugsweise von 20 bis 60°C, gemischt und wie bereits beschrieben in den Raum zwischen (i) und (iii) eingebracht. Die Vermischung kann mechanisch mittels eines Rührers oder einer Rührschnecke oder Gegenstromvermischung bei Hochdruckverarbeitung durchgeführt werden. Die Reaktionstemperatur, d.h. die Temperatur, bei die Umsetzung erfolgt, beträgt üblicherweise > 20 °C, bevorzugt 50 bis 150 °C.

Die Polyisocyanat-Polyadditionsprodukte (ii) der erfindungsgmemäß hergestellten Verbundelemente weisen bevorzugt ein Elastizitätsmodul von >275 MPa im Temperaturbereich von -45 bis +50°C (nach DIN 53457), eine Adhäsion zu (i) und (iii) von >4 MPa (nach DIN 53530), eine Dehnung von >30% im Temperaturbereich von -45 bis +50 °C (nach DIN 53504), eine Zugfestigkeit von >20 MPa (nach DIN 53504) und eine Druckfestigkeit von > 20 MPa (nach DIN 53421) auf.

Die nach dem erfindungsgemäßen Verfahren herstellbaren Verbundelemente weisen folgende Vorteile gegenüber bekannten Konstruktionen auf:
- Streben und ähnliche Versteifungselemente werden fast vollständig überflüssig. Dies führt zu einer erheblichen Kostenreduktion in der Produktion durch Materialersparnis und einen wesentlich einfacheren Korrosionsschutz.
- Bei einem Einsatz im Schiffbau ergeben sich durch das geringere Gewicht eine höhere Tonnage bzw. ein geringerer Treibstoffverbrauch.
- Die Wartung beispielsweise hinsichtlich Korrosionsschutz wird wesentlich vereinfacht. Dadurch ergeben sich längere Instandsetzungsintervalle.
- Die Sandwichstruktur mit dem Polyisocyanat-Polyadditionsprodukt, beispielsweise dem Polyurethanelastomer, führt zu einer besseren Energieabsorbtion und damit geringeren Rißfortpflanzung. Bekannte Stahlkonstruktionen neigen nach einer Perforierung bei weiterer Belastung stark zu einer Rißbildung, d.h. die Leckage breitet sich großflächig über den Schiffsrumpf aus. Dadurch ergibt sich eine Minimierung des Schadensrisikos im Falle von Unfällen oder extremen Belastungen. Dieser verbesserte Sicherheitsstandard ist insbesondere für Tankschiffe vorteilhaft.
- Die Polyisocyanat-Polyadditionsprodukte auf der Basis von Polyetherpolyalkoholen sind stabiler gegen einen hydrolytischen Abbau als Produkte auf der Basis von Polyesterpolyalkoholen. Dies bietet insbesondere für einen Einsatz der Verbundelemente im Schiffbau erhebliche Vorteile.
- Die Reaktionsmischung enthaltend die Polyetherpolyalkohole zur Herstellung von (ii) weist eine deutlich niedrigere Viskosität als Reaktionsmischungen auf der Basis von Polyesterpolyalkoholen auf. Dadurch ist eine einfachere und schnellere Fertigung der Verbundelemente möglich.
- Der bevorzugte Gehalt an Füllstoffen in den bevorzugten Polyisocyanat-Polyadditionsprodukten bewirkt eine Verringerung des thermischen Ausdehnungskoeffizienten von (ii)- und damit eine Angleichung an die Koeffizienten von (i) und (iii). Spannungen zwischen (i), (ii) und (iii) durch eine thermischen Belastung insbesondere durch die Umgebungstemperatur, beispielsweise im Falle von Schiffsrümpfen durch unterschiedliche Wassertemperaturen, konnten erfindungsgemäß verringert werden. Die Haftung von (ii) an (i) und (iii) wurde dadurch nachhaltig verbessert.
- Durch das bevorzugte Bestrahlen der Oberflächen von (i) und (iii) Sand konnte die Haftung von (ii) an (i) und (iii) deutlich verbessert werden. Durch die verbesserte Haftung werden stabilere und haltbarere Konstruktionselemente zugänglich.

Entsprechend finden die erfindungsgemäß erhältlichen Verbundelemente Verwendung vor allem in Bereichen, in denen Konstruktionselemente benötigt werden, die großen Kräften standhalten, beispielsweise als Konstruktionsteile im Schiffbau, z.B. in Schiffsrümpfen, beispielsweise Schiffsdoppelrumpfe mit einer äußeren und einer inneren Wand, und Laderaumabdeckungen, oder in Bauwerken, beispielsweise Brücken oder als Konstruktionselemente im Hausbau, insbesondere in Hochhäusern.

Die erfindungsgemäßen Verbundelemente sind nicht mit klassischen Sandwichelementen zu verwechseln, die als Kern einen Polyurethan- und/oder Polyisocyanurathartschaumstoff enthalten und üblicherweise zur thermischen Isolierung eingesetzt werden. Derartige bekannte Sandwichelemente wären aufgrund ihrer vergleichsweise geringeren mechanischen Belastbarkeit nicht für die genannten Anwendungsbereiche geeignet.

## Patentansprüche

1. Verbundelemente, die folgende Schichtstruktur aufweisen:
(i) 2 bis 20 mm Metall,
(ii) 10 bis 100 mm kompakte Polyisocyanat-Polyadditionsprodukte erhältlich durch Umsetzung von (a) Isocyanaten mit (b) Polyetherpolyalkoholen gegebenenfalls in Gegenwart von (c) Katalysatoren und/oder (d) Hilfs- und/oder Zusatzstoffen,
(iii)2 bis 20 mm Metall.

2. Verbundelemente nach Anspruch 1, **dadurch gekennzeichnet, daß** man als (b) eine Mischung einsetzt, die enthält:
(b1) 40 bis 99 Gew.-% Polyetherpolyalkohol mit einer mittleren Funktionalität von 1,5 bis 2,99 und einem mittleren Molekulargewicht von 400 bis 8000 und
(b2) 1 bis 60 Gew.-% Polyetherpolyalkohol mit einer mittleren Funktionalität von 3 bis 5 und einem mittleren Molekulargewicht von 150 bis 8000.

3. Verbundelemente nach Anspruch 2, **dadurch gekennzeichnet, daß** man als (b) eine Mischung einsetzt, die enthält:
(b1) 40 bis 98 Gew.-% Polyetherpolyalkohol mit einer mittleren Funktionalität von 1,5 bis 2,99 und einem mittleren Molekulargewicht von 400 bis 8000,
(b2) 1 bis 60 Gew.-% Polyetherpolyalkohol mit einer mittleren Funktionalität von 3 bis 5 und einem mittleren Molekulargewicht von 150 bis 8000 und
(b3) 1 bis 50 Gew.-% mindestens einer gegenüber Isocyanaten reaktiven Verbindung, die ein Kohlenwasserstoffgerüst mit 10 bis 40 Kohlenstoffatomen und 2 bis 4 gegenüber Isocyanaten reaktive Gruppen aufweist.

4. Verbundelemente nach Anspruch 1, **dadurch gekennzeichnet, daß** (ii) 10 bis 70 Gew.-% Füllstoffe, bezogen auf das Gewicht von (ii), als (d) Hilfs- und/oder Zusatzstoffe enthält.

5. Verbundelemente nach Anspruch 1, **dadurch gekennzeichnet, daß** (ii) ein Elastizitätsmodul von >275 MPa im Temperaturbereich von -45 bis +50 °C, eine Adhäsion zu (i) und (iii) von >4 MPa, eine Dehnung von >30% im Temperaturbereich von -45 bis +50 °C, eine Zugfestigkeit von >20 MPa und eine Druckfestigkeit von > 20 MPa aufweist.

6. Verfahren zur Herstellung von Verbundelementen nach einem der Ansprüche 1 bis 5, **dadurch gekennzeichnet, daß** man zwischen (i) und (iii) durch Umsetzung von (a) Isocyanaten mit (b) Polyetherpolyalkoholen gegebenenfalls in Gegenwart von (c) Katalysatoren und/oder (d) Hilfs- und/oder Zusatzstoffen kompakte Polyisocyanat-Polyadditionsprodukte herstellt, die an (i) und (iii) haften.

7. Verbundelemente erhältlich durch ein Verfahren gemäß Anspruch 6.

8. Verbundelemente nach Anspruch 7, die die Eigenschaften gemäß Anspruch 5 aufweisen.

9. Verwendung von Verbundelementen nach einem der Ansprüche 1 bis 5, 7 oder 8 als Konstruktionsteile im Schiffbau, beispielsweise in Schiffsrümpfen und Laderaumabdeckungen, oder in Bauwerken, beispielsweise Brücken.

10. Schiffe oder Brücken enthaltend Verbundelemente nach einem der Ansprüche 1 bis 5, 7 oder 8.

## Claims

1. A composite element having the following layer structure:
(i) 2-20 mm of metal,
(ii)10-100 mm of compact polyisocyanate polyaddition products obtainable by reacting (a) isocyanates with (b) polyether polyalcohols, if desired in the presence of (c) catalysts and/or (d) auxiliaries and/or additives,
(iii) 2-20 mm of metal.

2. A composite element as claimed in claim 1, wherein (b) is a mixture comprising:
(b1)from 40 to 99% by weight of polyether polyalcohol having a mean functionality of from 1.5 to 2.99 and a mean molecular weight of from 400 to 8000 and
(b2)from 1 to 60% by weight of polyether polyalcohol having a mean functionality of from 3 to 5 and a mean molecular weight of from 150 to 8000.

3. A composite element as claimed in claim 2, wherein (b) is a mixture comprising:
(b1) from 40 to 98% by weight of polyether polyalcohol having a mean functionality of from 1.5 to 2.99 and a mean molecular weight of from 400 to 8000,
(b2)from 1 to 60% by weight of polyether polyalcohol having a mean functionality of from 3 to 5 and a mean molecular weight of from 150 to 8000 and
(b3)from 1 to 50% by weight of at least one compound which is reactive toward isocyanates and has a hydrocarbon skeleton comprising from 10 to 40 carbon atoms and from 2 to 4 groups which are reactive toward isocyanates.

4. A composite element as claimed in claim 1, wherein (ii) comprises from 10 to 70% by weight of fillers, based on the weight of (ii), as (d) auxiliaries and/or additives.

5. A composite element as claimed in claim 1, wherein (ii) has a modulus of elasticity of >275 MPa in the temperature range from -45 to +50°C, an adhesion to (i) and (iii) of >4 MPa, an elongation of >30% in the temperature range from -45 to +50°C, a tensile strength of >20 MPa and a compressive strength of >20 MPa.

6. A process for producing a composite element as claimed in any of claims 1 to 5, wherein compact polyisocyanate polyaddition products which adhere to (i) and (iii) are prepared between (i) and (iii) by reacting (a) isocyanates with (b) polyether polyalcohols, if desired in the presence of (c) catalysts and/or (d) auxiliaries and/or additives.

7. A composite element obtainable by a process as claimed in claim 6.

8. A composite element as claimed in claim 7 having the properties as claimed in claim 5.

9. The use of a composite element as claimed in any of claims 1 to 5, 7 or 8 as a structural component in shipbuilding, for example in ships' hulls and hold covers, or in civil engineering constructions, for example bridges.

10. A ship or bridge comprising a composite element as claimed in any of claims 1 to 5, 7 or 8.

## Revendications

1. Eléments composites qui présentent la structure de couches ci-après :
(i) de 2 à 20 mm de métal,
(ii) de 10 à 100 mm de produits compacts de polyaddition de polyisocyanates que l'on obtient par mise en réaction de (a) des isocyanates avec (b) des polyétherpolyols le cas échéant en présence de (c) des catalyseurs et/ou de (d) des adjuvants et/ou des additifs,
(iii) de 2 à 20 mm de métal.

2. Eléments composites selon la revendication 1, **caractérisés en ce qu'**on met en oeuvre, à titre de (b), un mélange qui contient :
(b1) à concurrence de 40 à 99 % en poids, un polyétherpolyol possédant une fonctionnalité moyenne de 1,5 à 2,99 et un poids moléculaire moyen de 400 à 8000 et
(b2) à concurrence de 1 à 60 % en poids, un polyétherpolyol possédant une fonctionnalité moyenne de 3 à 5 et un poids moléculaire moyen de 150 à 8000.

3. Eléments composites selon la revendication 2, **caractérisés en ce qu'**on met en oeuvre, à titre de (b), un mélange qui contient :
(b1) à concurrence de 40 à 98 % en poids, un polyétherpolyol possédant une fonctionnalité moyenne de 1,5 à 2,99 et un poids moléculaire moyen de 400 à 8000,
(b2) à concurrence de 1 à 60 % en poids, un polyétherpolyol possédant une fonctionnalité moyenne de 3 à 5 et un poids moléculaire moyen de 150 à 8000, et
(b3) à concurrence de 1 à 50 % en poids, au moins un composé apte à réagir vis-à-vis d'isocyanates, qui présente un squelette hydrocarboné contenant de 10 à 40 atomes de carbone et de 2 à 4 groupes aptes à réagir vis-à-vis d'isocyanates.

4. Eléments composites selon la revendication 1, **caractérisés en ce que** (ii) contient, à concurrence de 10 à 70 % en poids, des substances de charge, rapportées au poids de (ii), à titre d'adjuvants et/ou d'additifs (d).

5. Eléments composites selon la revendication 1, **caractérisés en ce que** (ii) présente un module d'élasticité > 275 MPa dans la plage de température de -45 à +50 °C, une adhérence à (i) et à (iii) > 4 MPa, un allongement > 30 % dans la plage de température de -45 à +50 °C, une résistance à la traction > 20 MPa et une résistance à la compression > 20 MPa.

6. Procédé pour la préparation d'éléments composites selon l'une quelconque des revendications 1 à 5, **caractérisé en ce qu'**on prépare, entre (i) et (iii), par mise en réaction de (a) des isocyanates avec (b) des polyétherpolyols le cas échéant en présence de (c) des catalyseurs et/ou de (d) des adjuvants et/ou des additifs, des produits compacts de polyaddition de polyisocyanates qui adhèrent à (i) et à (iii).

7. Eléments composites que l'on obtient via un procédé selon la revendication 6.

8. Eléments composites selon la revendication 7, qui présentent les propriétés selon la revendication 5.

9. Utilisation d'éléments composites selon l'une quelconque des revendications 1 à 5, 7 ou 8 à titre de pièces de construction dans la construction navale, par exemple dans des coques de bateaux et dans des revêtements de cales à marchandises, ou encore dans des ouvrages, par exemple dans des ponts.

10. Bateaux ou ponts contenant des éléments composites selon l'une quelconque des revendications 1 à 5, 7 ou 8.
